# EUROPEAN PATENT APPLICATION

(11) **EP 1 619 574 A1**
(43) Date of publication of application: **25.01.2006**
(21) Application number: 04017552.3
(22) Date of filing: 23.07.2004
(51) Int. Cl.: G06F 1/16

(54) **Motherboard adapted to a notebook computer**

(71) Applicant: VAC Corporation, Taipei (TW)
(72) Inventor: Hua, Chung-Cheng, Taipei (TW)
(74) Representative: Viering, Jentschura & Partner

(57) **Abstract**

A motherboard (5) is adapted to a notebook computer and disposed on a frame (34) of the notebook computer, the motherboard having an area equal to one half the area of the frame, the notebook further having a battery (37), a CD-ROM (36) and a heat-dissipating module (35) disposed on antoher area of the frame. The motherboard has a board, and the board has a top and a bottom surface. A central processing unit (CPU) (511) is disposed on the top surface of the board and a memory is located near the CPU. A plurality of connectors is disposed on the back of the motherboard and a south bridge chip and a north bridge chip are disposed on the back of the motherboard. External ports/terminals are exposed on the different side edges of different kinds of notebook computers.

## Description

### BACKGROUND OF THE INVENTION

### 1. Field of the Invention

The present invention relates to a motherboard adapted to a notebook computer, more particularly to a motherboard assembled in a notebook computer. The motherboard has a layout design for being rotated to different positions so as to be disposed on different kinds of notebook computer frames.

### 2. Description of the Prior Art

Industry constantly seeks to improve the efficiency of notebook computers, as well as to expand the functions thereof in response to consumer demands and needs. Two main considerations made by a customer when purchasing a notebook computer are the performance of the internal equipment and the external appearance thereof.

However, every new design for the external appearance of notebook computer requires that the motherboard be redesigned as well. The greatest limitation on assembly of different specifications of notebook computer manufacturers is that the same motherboard can't be used in different notebook computers.

Certainly, the inventor of the present invention recognizes that the above problem should be corrected and special effort is paid to research in this field. The present invention is presented with reasonable design and good effect to resolve the above problem.

### SUMMARY OF THE INVENTION

The primary object of the present invention is to provide a motherboard adapted to a notebook computer, in which the motherboard has a layout design that can be rotated to different positions so as to be disposed on the different kinds of frames of the notebook computers, by locating alternately different classes of motherboards and frames of notebook computers to design the different specifications of the notebook computers.

For achieving the object above, a motherboard is adapted to a notebook computer and disposed on a frame of the notebook computer, the motherboard having an area equal to one half the area of the frame. The notebook computer further has a battery, a CD-ROM and a heat-dissipating module disposed in another area of the frame. The motherboard has a board and the board has a gap, a top surface, and a bottom surface. The top surface of the board defines a random access memory (RAM) disposed substantially in a middle of the motherboard, a central processing unit (CPU) disposed on an edge of the board, a read only memory (ROM), a power socket located near the CPU, a hard disc (HD) disposed detachably on the board, a plurality of external slots located on an edge of the board and facing toward a side edge of the frame, and a plurality of connectors. The bottom surface of the board has a north bridge chip disposed near the gap, a south bridge chip disposed on the back of the HD, and a plurality of connectors located substantially on the middle of the motherboard with the external slots exposed by the different side edges of the different kinds of notebook computers.

To provide a further understanding of the invention, the following detailed description illustrates embodiments and examples of the invention, this detailed description being provided only for illustration of the invention.

### BRIEF DESCRIPTION OF THE DRAWINGS

The foregoing aspects and many of the attendant advantages of this invention will be more readily appreciated as the same becomes better understood by reference to the following detailed description, when taken in conjunction with the accompanying drawings, wherein:
Fig. 1 is a perspective exploded bottom view of the notebook computer to the present invention;
Fig. 2 is a bottom view of the motherboard to the present invention;
Fig. 3 is a top view of the motherboard to the present invention;
Fig. 3A is a side view of the motherboard to the present invention;
Fig. 4 is an assembly bottom view of the motherboard disposed on a frame of the present invention; and
Fig. 5 is an assembly bottom view of the motherboard disposed on another frame of the present invention.

### DETAILED DESCRIPTION OF THE EMBODIMENTS

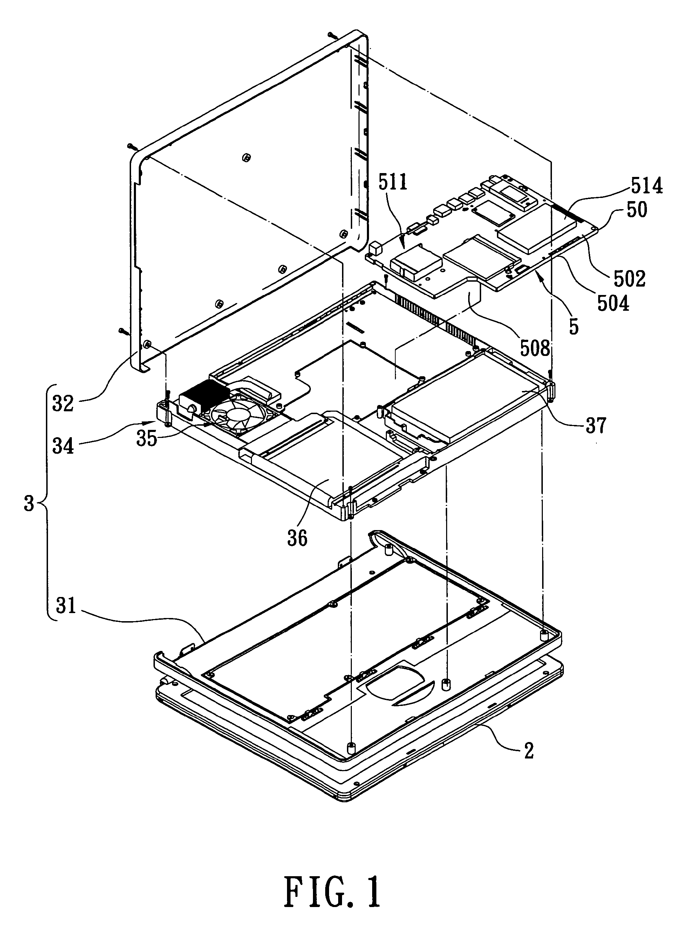

Reference is made to Fig. 1, which is a perspective exploded bottom view of the notebook computer **1** to the present invention. The notebook computer has a mimic panel **2** and a host **3.** The host **3** defining defines an upper case **31,** a lower case **32,** and a metal frame **34** located between the upper case **31** and the lower case **32.** A mimic panel **2** is connected pivotally to one side of the frame **34.**

The frame **34** is used to contain all kinds of electronic components and the frame at least includes a motherboard **5,** a heat-dissipating module **35** for dissipating the fever generated from the motherboard **5,** a CD-ROM **36** such as VCD or DVD for accessing the data, and a battery **37** for providing the power of the notebook computer. The frame **34** appears somewhat as a rectangle. One half of the area of the frame **34** is the area of the motherboard 5 and another half of the area of the frame **34** includes the battery **37,** the CD-ROM **36 ,** and the heat-dissipating module **35.**

The present invention redesigns an outline and a layout of the motherboard **5** to rotate the motherboard **5** to different positions so as to dispose the motherboard **5** on the different kinds of frames of the notebook computers. The motherboard **5** has a board body **50** defining a top surface **502** and a bottom surface **504.** A plurality of electronic components is disposed on the board **50** and a circuit is formed on the board **50.** The board **50** appears somewhat as a rectangle and the board **50** has a rectangular gap 508 for saving a space of the motherboard 5.

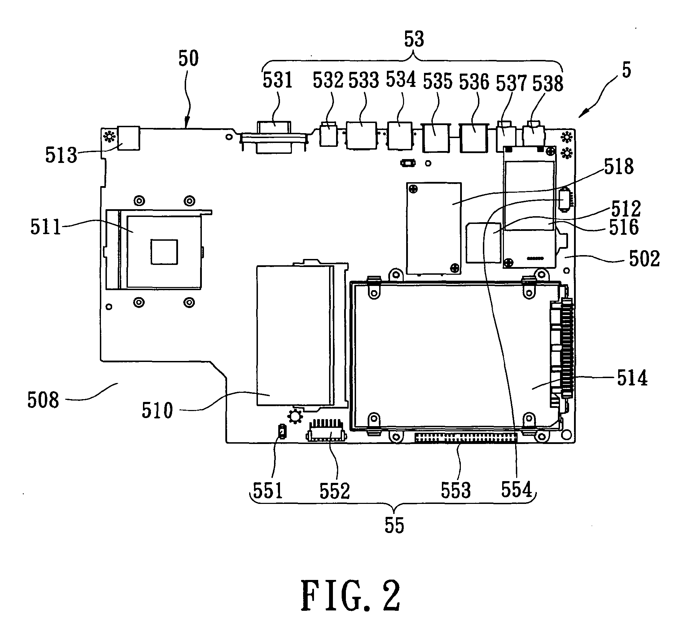

Reference is made to Fig. 2, which is a bottom view of the motherboard 5 to the present invention. The motherboard **5** has a top surface **502** defining a random access memory (RAM) **510,** a central processing unit (CPU) **511,** a read only memory (ROM) **512**, a power socket **513** for connecting the plug of the AC transformer, a hard disc (HD) **514,** a plurality of external slots **53,** and a plurality of connector **55**.

The CPU **511** is disposed near the motherboard **5** for the suitable layout of the heat-dissipating module **35.** The RAM **510** is disposed substantially on the middle of the motherboard **5.** The HD **514** is located near the bottom edge of the motherboard 5 and disposed detachably on the motherboard. A plurality of external slots **53** is located alongside on the top edge of the motherboard 5 for connecting electrically with the external peripherals. The external slots **53** including a VGA port **531,** a 1394 terminal **532,** a RJ-45 Modem terminal **533,** a RJ-11 Ethernet terminal **534,** two USB ports **535, 536,** a microphone terminal **537,** and a earphone terminal **538.** A plurality of connectors **55** has a fan connector **551,** a battery connector **552,** a CD-ROM connector **553,** and a wireless module socket **554.** The connector 55 is disposed near the edge of the motherboard **5.**

The top surface **502** of the board **50** of the motherboard **5** further comprises a wireless module **516** and a modem module **518.** The wireless module **516** is disposed near the edge of the motherboard 5 for transmitting and receiving signals of the wireless communication.

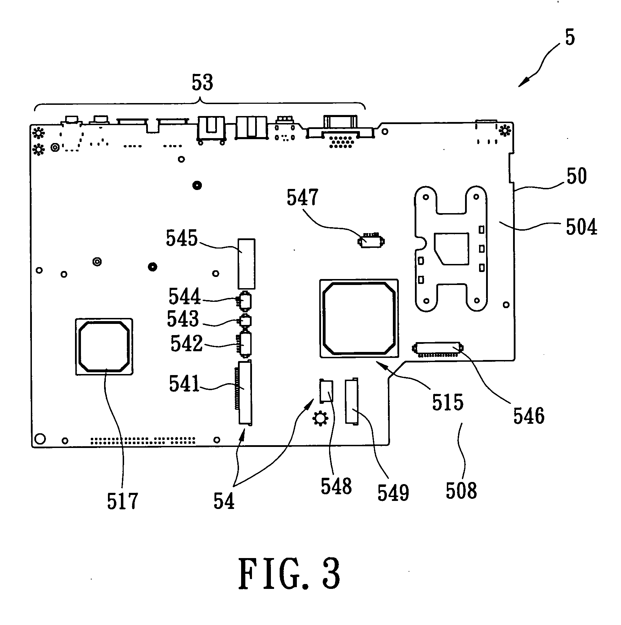

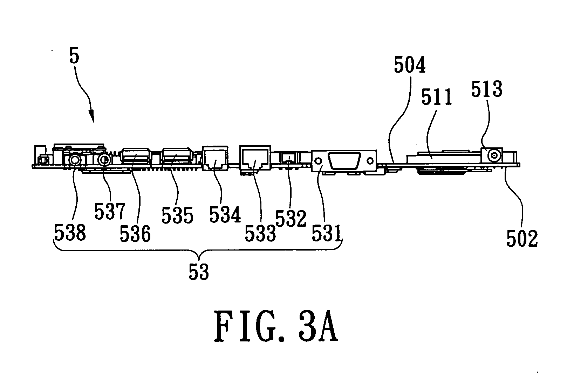

Reference is made to Fig. 3, which is a top view of the motherboard **5** to according to the present invention. The back **504** of the motherboard **5** includes a north bridge chip **515,** a south bridge chip **517,** and a plurality of connectors **54.** The north bridge chip **515** is disposed near the gap **508** for contacting the high-speed peripherals such as, for example, a RAM **510,** a CPU **511,** and a display card. The north bridge chip 515 is disposed substantially to the back of the CPU **511** and the RAM **510.** The south bridge chip **517** is disposed in back of the HD **514** for contacting the low-speed peripherals such as the slot of the interface card and for contacting the connection interface of the saving devices such as HD **514,** and CD-ROM. A plurality of connectors **54** has a keyboard connector **541,** an indicator light connector **542,** a microphone connector **543,** a loudspeaker connector **544;** a LVDS terminal **545,** a panel board **546,** a transformer rectifier **547,** a touch pad connector **548,** and a card reader connector **549.** a plurality of connectors **54** is disposed substantially on the middle of the motherboard 5 for electrically connecting with various electronic components. As a result of the layout of a plurality of connectors **54** disposed substantially on the middle of the back **504** of the motherboard **5** and exposed to the middle opening of the frame **34** (shown in Fig. 1), maintenance of the motherboard **5** and various electronic components is convenient and easy.

Reference is made to Fig. 3A, which is a side view of the motherboard **5** according to the present invention. A plurality of external slots **53** of the motherboard **5** is exposed to the longer side edge thereof. When the motherboard **5** rotates, the external slot **53** also rotates in different directions; the motherboard **5** is light extremely. A width of the motherboard **5** is nearly equal a width of the external slots **53** adds a width of the CPU **511.** The long side edge of the motherboard **5** is 230mm, the short side edge of the motherboard **5** is 155mm, and an area of the gap **508** is 60mm X 40mm.

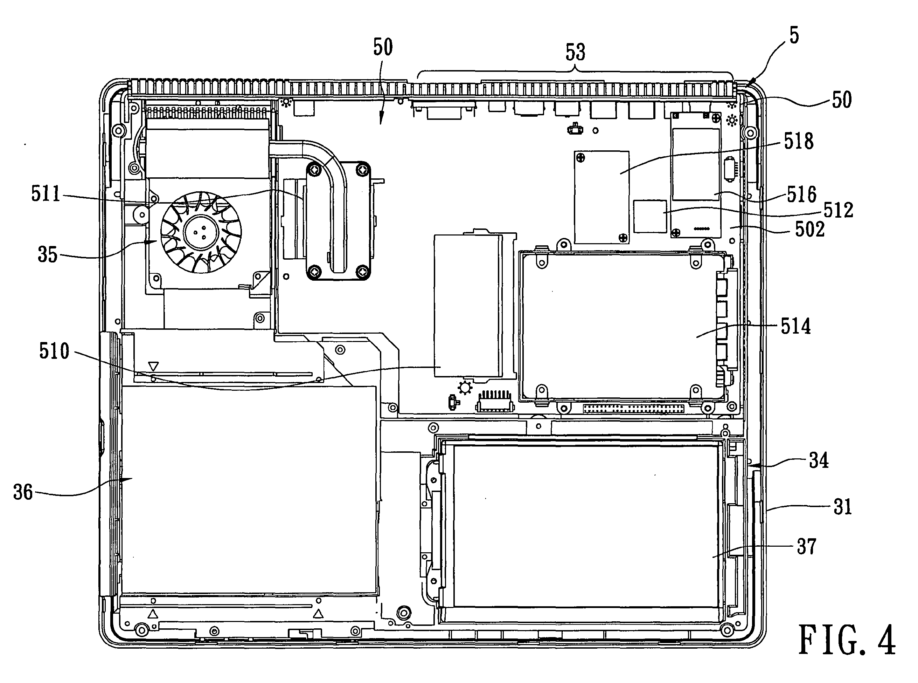

Reference is made to Fig. 4, which is an assembly bottom view of the motherboard disposed on a frame of the present invention. Viewing the proportion of the motherboard **5** to the frame **34** of the notebook computer **1**, half of the area of the frame **34** is the area of the motherboard **5** and another half of the area of the frame **34** includes a **battery 37,** a CD-ROM **36,** and a heat-dissipating module **35** disposed on the top edge of the frame **34.** A length of the long side edge of the niotherboard **5** is slightly shorter than a-length of the short side edge of frame **34** and a length of the short side edge of the motherboard **5** is about half of a length of the long side edge of the frame **34;** therefore, the motherboard **5** is disposed in other directions by rotating the direction of the frame **34.**

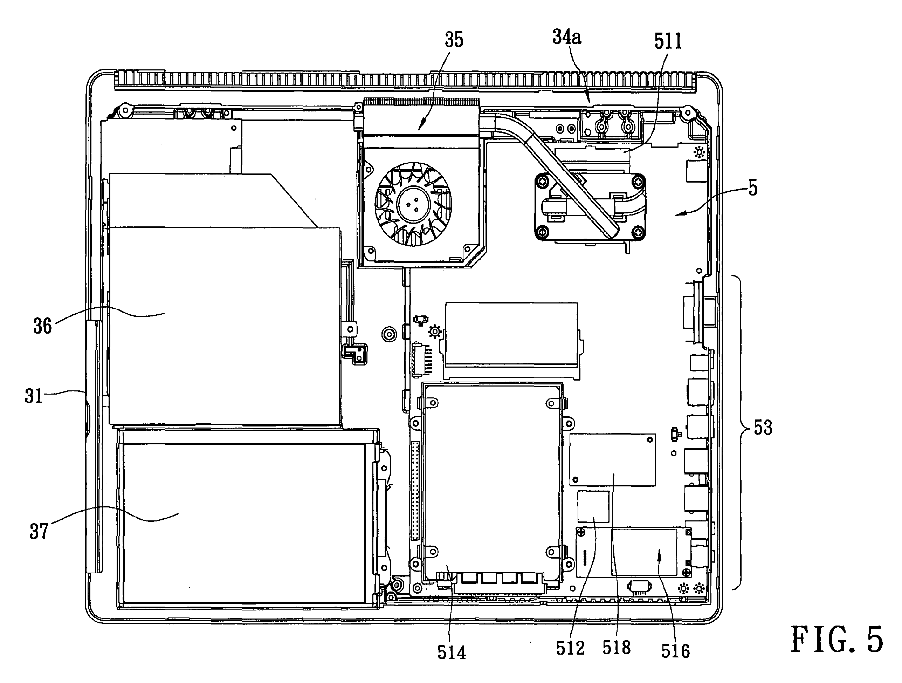

Reference is made to Fig. 5, which is an assembly bottom view of the motherboard disposed on another frame of the present invention. According to the proportion of the motherboard 5 to the frame **34** of the notebook computer **1** and the layout design of the motherboard 5, the motherboard **5** is rotated in other directions with the same layout design for location on different frames **34a.** The external slots **53** of the motherboard **5** are disposed on the side edge of the notebook computer **1** to cause a difference in the appearance thereof. Therefore, the same type of motherboard **3** is suitable to different kinds of notebook computers to reduce effectively the storage space of the motherboard **5** and the cost of redesigning.

The motherboard **5** of the present invention is advantageous to production of notebook computers with different appearances and equipment. That is to say, slightly changing the CPU of different factories and other equipment' results in at least the three types of motherboards with different classes. Furthermore, the two types of frames, horizontal frame and vertical frame, and a third type frame, rotate the external slots **53** to the right side of the notebook computer; that is to say, three types of frames and three types of motherboards with different classes result in nine types of appearance and equipment of the notebook computers.

Those skilled in the art will readily appreciate that the above description is only illustrative of specific embodiments and examples of the invention. The invention should therefore cover various modifications and variations made to the herein-described structure and operations of the invention, provided they fall within the scope of the invention as defined in the following appended claims.

## Claims

1. A motherboard adapted to a notebook computer and disposed on a frame of the notebook computer, the motherboard having an area equal to one half an area of the frame, the notebook computer further having a battery, a CD-ROM and a heat-dissipating module disposed in another area of the frame, the motherboard comprising:
a board having a gap, a top surface, and a bottom surface;
wherein the top surface of the board defines a random access memory (RAM) disposed substantially on a middle of the motherboard, a central processing unit (CPU) disposed on an edge of the board, a read only memory (ROM), a power socket located near the CPU, a hard disc (HD) disposed detachably on the board, a plurality of external slots located in an edge of the board and facing toward a side edge of the frame, and a plurality of connectors; and
wherein the bottom surface of the board has a north bridge chip disposed near the gap, a south bridge chip disposed on a back of the HD, and a plurality of connectors located substantially on the middle of the motherboard;
whereby the external slots are exposed by different side edges of different kinds of notebook computers.

2. The motherboard as claimed in claim 1, wherein each external slot has a VGA port, a 1394 terminal, a RJ-45 Modem terminal, a RJ-11 Ethernet terminal, two USB ports, a microphone terminal and an earphone terminal.

3. The motherboard as claimed in claim 2, wherein the motherboard has a width similar to that of the external slots and the CPU.

4. The motherboard as claimed in claim 1, wherein each of the connectors has a fan connector, a battery connector, a CD-ROM connector and a wireless module socket, and the connector is disposed on an edge of the motherboard.

5. The motherboard as claimed in claim 1, wherein the top surface of the board further has a wireless module disposed near the edge of the board.

6. The motherboard as claimed in claim 5, wherein the top surface of the board further has a modem module disposed near the wireless module.

7. The motherboard as claimed in claim 1, wherein each of the connectors has a keyboard connector, an indicator light connector, a microphone connector, a loudspeaker connector, a LvDS terminal, a panel board power connector, a transformer rectifier, a touch pad connector, and a card reader connector.

8. The motherboard as claimed in claim 1, wherein the motherboard has a long side shorter than a short side of the notebook computer.

9. The motherboard as claimed in claim 1, wherein the motherboard has a short side about half a length of a long side of the frame.

10. The motherboard as claimed in claim 1, wherein the motherboard has a long side of about 230mm and a short side of about 155mm, and the gap has a area of about 60mm x 40mm.
